# FASCICULE DE BREVET EUROPEEN

(11) **EP 3 957 521 B1**
(45) Date de publication et mention de la délivrance du brevet: **11.10.2023**
(21) Numéro de dépôt: 21181612.9
(22) Date de dépôt: 24.06.2021
(51) Int. Cl.: B60P 3/20

(54) **SYSTÈME DE COMPARTIMENTATION ESCAMOTABLE D'UN ESPACE ENTOURÉ DE PAROIS**
VERSENKBARES TRENNWANDSYSTEM FÜR EINEN VON WÄNDEN UMGEBENEN RAUM
SYSTEM FOR RETRACTABLE COMPARTMENTALISATION OF A SPACE SURROUNDED BY WALLS

(30) Priorité: 20.08.2020 FR 2008595
(43) Date de publication de la demande: 23.02.2022
(73) Titulaire: Pommier, 95250 Beauchamp (FR)
(72) Inventeur: GUIDETTI, Stefano, 42023 CADELBOSCO DI SOPRA (IT)
(74) Mandataire: Lefevre-Groboillot, David André

(56) Documents cités:
- DE-U1- 20 002 002
- FR-A1- 3 035 835
- FR-A3- 2 635 737

## Description

L'invention a trait au cloisonnement intérieur d'un espace clos entouré de parois, et propose plus particulièrement un système de cloisons intérieures escamotables pour un espace de chargement de véhicule de transport. Les contraintes associées à un espace de chargement de véhicule de transport sont connues : il est nécessaire de disposer de systèmes faciles à manipuler, peu encombrants et légers, notamment, ainsi que résistants à un usage intensif et aux vibrations du transport. On s'intéresse de plus en particulier aux camions de transport frigorifique, et les cloisons escamotables doivent donc de préférence proposer un niveau intéressant d'isolation thermique et d'isolation contre les transferts d'humidité pour maintenir les conditions de température et d'hygrométrie dans les différents espaces.

Une ou plusieurs cloisons disposées à l'intérieur d'un espace et permettant de diviser cet espace en plusieurs sous-espaces de façon réversible permettent de choisir et de modifier le nombre et la dimension des sous-espaces utilisables en fonction des besoins.

De telles cloisons permettent ainsi, par exemple, d'utiliser les sous-espaces pour des usages différents, pour maintenir des conditions de température et humidité différentes dans les différents sous-espaces ou encore pour limiter le mouvement de marchandises stockées lorsque l'espace est en mouvement, en dimensionnant le sous-espace pour bloquer ces marchandises.

Il peut être utile que les cloisons intérieures soient mobiles entre une position de division de l'espace et une position escamotée parallèlement à une des parois définissant l'espace, contre cette paroi. On pense au plafond, mais il est aussi envisageable d'escamoter une cloison contre une paroi latérale verticale, voire contre un plancher.

Ainsi, même lorsque l'espace n'a pas besoin d'être divisé, les cloisons sont transportées et rapidement mises en place au moment où l'on en a besoin.

Le document FR2976545A1 décrit ainsi un système de cloisons intérieures escamotables contre le plafond d'une remorque de camion. Le système de cloison comprend un moyen de suspension et articulation de chaque cloison placé au plafond, sur un rail interagissant avec un chariot coulissant. Le moyen de suspension et articulation permet de pivoter la cloison entre sa position de division verticale et sa position escamotée parallèle au plafond. Ce système comprend également une béquille avec une tête d'appui pour l'immobilisation en position verticale, disposée sur la cloison à l'opposé du moyen de suspension et articulation et appuyant contre le plancher. Il comprend aussi deux verrous de la cloison en position escamotée, disposé à mi-hauteur de la paroi, et qui interagissent chacun par un loqueteau avec une battue latérale ou rebord latéral du profilé qui forme le rail le plus proche. Le verrou peut être dégagé par action sur une manette locale placée sur l'autre face de la cloison, visible par l'opérateur quand la cloison est escamotée. Mais le verrou ne s'escamote pas, et occupe de l'espace utile quand la cloison est en position de division, non escamotée. Un système de cloison intérieure similaire est aussi connu du document FR2635737A3.

La demande de brevet français non encore publiée n°1901670 décrit également un système de cloison intérieure comprenant un moyen de suspension configuré pour positionner une cloison dans une position verticale ou dans une position escamotée le long d'un plafond de l'espace. Les moyen de suspension et articulation et les moyens de verrouillage sont insérés dans la cloison et occupent une place moins importante que celui décrit dans le document FR2976545.

Cependant, il y a encore des aménagements à mener pour qu'un tel système de cloison soit maintenu dans la position escamotée en stabilisant son porte-à-faux qui est susceptible de vibrer quand le camion roule sur des irrégularités de la chaussée.

L'objectif de l'invention est de proposer un système de cloison intérieure d'un espace où la cloison est apte à être disposée dans une position de division et dans une position escamotée, réduisant au maximum la place occupée dans l'espace et assurant un blocage efficace et sûr en position verticale comme en position escamotée.

A cet effet, il est proposé, en premier lieu, un système de compartimentation escamotable d'un espace entouré de parois, le système de compartimentation comprenant une cloison et un moyen de pivotement de la cloison entre une position de division de l'espace et une position escamotée dans laquelle la cloison est disposée contre une première paroi de l'espace, le système de compartimentation comprenant un mécanisme de manipulation et blocage embarqué sur la cloison comportant un béquille adoptant une position étendue dans laquelle la béquille peut être en appui contre une deuxième paroi de l'espace opposée à la première paroi pour bloquer la cloison dans sa position de division ou, en fonction de la manipulation effectuée, laissant la cloison mobile entre sa position de division et sa position escamotée, le système de compartimentation comprenant aussi un crochet du mécanisme de manipulation et blocage pour maintenir à la première paroi la partie distale, par rapport au moyen de pivotement, de la cloison quand elle est en position escamotée, le crochet adoptant une position de fixation sous l'action d'un opérateur engageant le crochet dans une prise complémentaire de la première paroi pour maintenir la cloison en position escamotée, et adoptant une position de libération sous l'action d'un opérateur tirant une commande accessible sur la face de la cloison opposée au crochet.

Ainsi, le système de cloison combine la béquille bloquant la cloison dans sa position de division et le crochet maintenant la cloison dans sa position escamotée. Le système de cloison simplifie donc la manutention nécessaire pour mouvoir la cloison entre ses positions de division et escamotée.

Le crochet est relié à la béquille par une biellette du mécanisme de manipulation et blocage qui amène la béquille en position étendue en rétractant simultanément le crochet dans l'épaisseur de la cloison, et inversement extrait le crochet de l'épaisseur de la cloison en rétractant simultanément la béquille, la commande du crochet comprenant un moyen de traction monté tel une sangle, une corde, un câble, une chaîne ou une chaînette glissant dans un passage de la cloison pour suivre le crochet lors de son extraction et s'effacer lors de sa rétractation.

Ainsi, on dispose d'un moyen de commande du crochet alors que celui-ci est rétractable dans l'épaisseur de la paroi, et qu'il est nécessairement inaccessible quand la cloison est escamotée. Il fallait pour cela aller à l'encontre des systèmes de l'art antérieur mentionné ci-dessus, qui soit ne proposaient pas de crochet, soit proposaient un crochet qui ne se rétractait pas dans l'épaisseur de la paroi compte tenu de la difficulté à prévoir sa commande sur la face opposée de la cloison.

Diverses caractéristiques supplémentaires peuvent être prévues, seules ou en combinaison :
- la prise complémentaire peut être un profilé fixé à la première paroi sur lequel la cloison est montée en translation en sorte qu'il lui serve de rail ;
- le crochet peut disposer de deux agrafes qui s'insèrent symétriquement dans une concavité de la prise complémentaire ;
- un ou des ressorts peuvent rappeler le crochet soit vers la position de libération soit vers la position de fixation, une fois la position adoptée ;
- les positions de fixation et de libération peuvent être séparées par un cran et définies par deux renfoncements dans une agrafe du crochet dans lesquels un crampon du crochet s'insère alternativement quand l'une ou l'autre des deux positions est adoptée, le crampon étant manoeuvré en rotation vis-à-vis du corps du crochet quand l'opérateur tire sur le moyen de traction en partant de la position de fixation, l'agrafe étant manoeuvrée en rotation vis-à-vis du corps du crochet quand l'opérateur engage le crochet sur la prise complémentaire ;
- la béquille et le crochet peuvent être articulés par l'intermédiaire de deux biellettes et d'une poignée extractible de la cloison par pivotement, la béquille se rétractant dans la cloison par translation, et le crochet se rétractant dans la cloison par rotation ;
- le moyen de traction peut être une sangle accrochée à une plaque montée en translation dans un corps du crochet, le passage étant une fente ;
- la première paroi peut être le plafond, et la deuxième le plancher.

L'invention va être décrite en lien avec les figures suivantes :
[Fig. 1] La figure 1 qui est une vue de trois quart présente le système de compartimentation en position de division de l'espace.
[Fig. 2] La figure 2 montre à partir de la position de la figure 1 l'activation d'un des mécanismes de manipulation et blocage de la cloison.
[Fig. 3] La figure 3 qui est une vue de trois quart du détail indiqué à la figure 1 montre la structure d'un mécanisme de manipulation et blocage en position enfoncée dans la cloison.
[Fig. 4] La figure 4 montre la structure du même élément de manipulation et blocage en position en saillie et en position de libération.
[Fig. 5] La figure 5 montre la mise en mouvement de la cloison vers sa position escamotée, sous le même angle de vue que la figure 1.
[Fig. 6] La figure 6 qui est une vue de trois quart du détail indiqué en figure 5 montre la mise en approche d'un mécanisme de manipulation et blocage et d'un rail servant d'attache.
[Fig. 7] La figure 7 montre la suite du mouvement à partir des deux figures précédentes.
[Fig. 8] La figure 8 montre la mise en place du crochet de mécanisme de manipulation de blocage dans un rail à la suite des trois figures précédentes, et constitue un agrandissement du détail indiqué en figure 7.
[Fig. 9] La figure 9 montre le même positionnement sous un angle différent. Il s'agit d'une vue dans un plan perpendiculaire à la cloison, le regard affleurant la surface de la cloison.
[Fig. 10] La figure 10 montre l'articulation de la cloison avec une paroi.
[Fig. 11] La figure 11 montre le mécanisme de manipulation et montage en position crochet en saillie et patin rétracté, et agrafes en position de fixation. Il s'agit d'une vue dans le plan de la cloison avec le regard perpendiculaire à la cloison.
[Fig. 12] La figure 12 montre le mécanisme de manipulation et montage en position crochet en saillie et patin rétracté, agrafes, en position de libération. Il s'agit d'une vue sous le même angle que la figure 11.
[Fig. 13] La figure 13 montre le mécanisme du crochet avec ses agrafes, en position de fixation.
[Fig. 14] La figure 14 montre le même mécanisme, avec les agrafes en position de libération.
[Fig. 15] La figure 15 montre, de côté et en coupe, le mécanisme de manipulation et blocage, en position crochet enfoncé dans la cloison et patin étendu. Le plan de coupe est perpendiculaire à la cloison et parallèle à la droite reliant l'articulation au mécanisme de manipulation et blocage.
[Fig. 16] La figure 16 montre sous le même angle et sous la même coupe le mécanisme de manipulation et blocage, avec le crochet en saillie, le patin rétracté. Le plan de coupe est perpendiculaire à la cloison et parallèle à la droite reliant l'articulation au mécanisme de manipulation et blocage.
[Fig. 17] La figure 17 montre en coupe dans le plan du crochet, le mécanisme de celui-ci avec les agrafes en position de fixation. Le plan est perpendiculaire à la cloison et perpendiculaire à la droite reliant l'articulation au mécanisme de manipulation et blocage.
[Fig. 18] La figure 18 montre sous le même angle et dans la même coupe le mécanisme avec les agrafes en position de libération. Le plan est perpendiculaire à la cloison et perpendiculaire à la droite reliant l'articulation au mécanisme de manipulation et blocage.
[Fig. 19] La figure 19 montre le crochet en coupe dans son plan de symétrie, avec les agrafes en position de fixation.
[Fig. 20] La figure 20 montre à nouveau le crochet en coupe dans son plan de symétrie, avec cette fois les agrafes en position de libération.

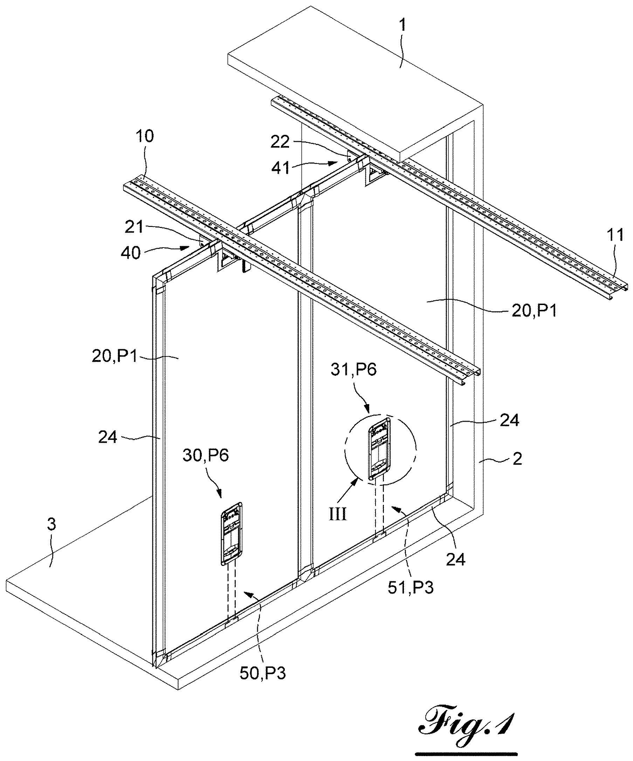

La figure 1 montre un espace entouré de parois dans lequel est mis en place un système de compartimentation selon l'invention.

L'espace entouré de parois est représenté ici par un plafond 1, une paroi latérale 2 (verticale), et un plancher 3. Une deuxième paroi latérale faisant face à la paroi latérale 2 complète la structure de l'espace cloisonné à laquelle l'invention s'applique à titre d'exemple. On comprend que l'espace entouré de parois peut comprendre deux autres parois verticales - parois d'extrémité - pour constituer un parallélépipède rectangle, qui est dans le mode de réalisation préféré l'espace de chargement d'un camion frigorifique dont l'une des parois d'extrémité constitue une porte pour charger et décharger la marchandise. Ainsi la paroi latérale 2 et la paroi latérale lui faisant face sont dans ce cas les flancs gauche et droit de l'espace de chargement du camion frigorifique et sont donc les surfaces verticales les plus grandes du parallélépipède rectangle constituant cet espace de chargement.

Parallèlement à la paroi latérale 2, sont mis en place un premier rail 10 et un deuxième rail 11 fixés à la face intérieure du plafond 1.

Une cloison 20 escamotable est placée pour compartimenter l'espace de chargement du camion frigorifique en un premier sous-espace à proximité de la porte (à droite sur la figure, ou encore à gauche) et un deuxième sous-espace au fond (à gauche sur la figure, ou respectivement à droite).

La cloison 20 est entourée de lèvres 24 qui viennent s'appuyer sur les surfaces du plafond 1, de la paroi latérale 2, du plancher 3 et de la deuxième paroi latérale non figurée. Ainsi la cloison 20 est un rectangle de dimensions très similaires à la porte (non représentée). Les dimensions de la forme rectangulaire de la cloison 20 sont choisies de manière à obturer le volume de l'espace de chargement du camion frigorifique quand la paroi latérale est placée perpendiculairement au plancher 3, au plafond 1 et à la paroi latérale 2.

La cloison 20 est ainsi présentée sur la figure en sa position de division. En effet, elle divise l'espace et le volume du compartiment de chargement du camion frigorifique en deux sous-compartiments. La position de division est notée P1.

La cloison 20 est suspendue au plafond 1 par l'intermédiaire d'un chariot 21 et d'un chariot 22 circulant sur le premier rail 10 et le second rail 11, respectivement. Le chariot 21 et le chariot 22 font partie respectivement d'une articulation 40 et d'une articulation 41 reliant la cloison 20 au plafond 1 par l'intermédiaire des rails 10 et 11.

L'articulation 40 et l'articulation 41 se situent sur le côté supérieur de la cloison 20, à environ un quart et trois quarts de la longueur du côté à partir de la paroi latérale opposée à la paroi latérale 2.

Au droit de l'articulation 40, se trouve à l'approche du plancher 3 et intégré dans la cloison 20 un mécanisme de manipulation et blocage 30. Au droit de l'articulation 41 et à l'approche du plancher 3, se trouve intégré dans la cloison 20 un deuxième mécanisme de manipulation et blocage 31.

Le long du côté de la cloison 20 opposé aux articulations 40 et 41, et au contact dans la configuration de la figure du plancher 3, se situent le premier mécanisme de manipulation et blocage et le deuxième mécanisme de manipulation et blocage 30 et 31 respectivement à environ un quart et trois quarts de la longueur de ce côté à partir de la paroi latérale faisant face à la paroi latérale 2.

Le mécanisme de manipulation et de blocage 30 comprend des éléments visibles affleurant sur l'une des faces de la cloison 20 - la face visible sur la figure - ainsi que des éléments cachés 50 dans l'épaisseur de la cloison 20 et débouchant sur la tranche de celle-ci. Le mécanisme de manipulation et blocage 31 comprend de la manière des éléments visibles affleurant sur la même face de la cloison 20 et des éléments cachés 51 intégrés dans l'épaisseur de la cloison 20 et affleurant sur sa tranche au contact du plancher 3. Les éléments cachés constituent une béquille.

Sur la figure, les éléments cachés 50 et 51 sont en position étendue, et c'est ainsi que des patins (non figurés) appuient, en saillie de la tranche de la cloison 20 contre le plancher 3, de manière à bloquer tout mouvement de la cloison 20 vis-à-vis du plancher 3. La cloison est alors encastrée dans l'espace interne du compartiment de chargement du camion frigorifique.

Ainsi, on comprend que la cloison 20 est articulée en rotation avec le plafond 1, et de par l'extension des éléments cachés 50 et 51 à l'opposé du plafond 1 perpendiculairement à la surface de celui-ci et perpendiculairement à la surface du plancher, la cloison est immobilisée et verrouillée dans la position représentée. Les éléments cachés 50 et 51 sont manipulables par un opérateur se trouvant du côté de la cloison 20 correspondant à la face sur laquelle les éléments visibles des mécanismes de manipulation et blocage sont affleurants. Il peut les basculer de la position étendue P3 à la position rétractée P4.

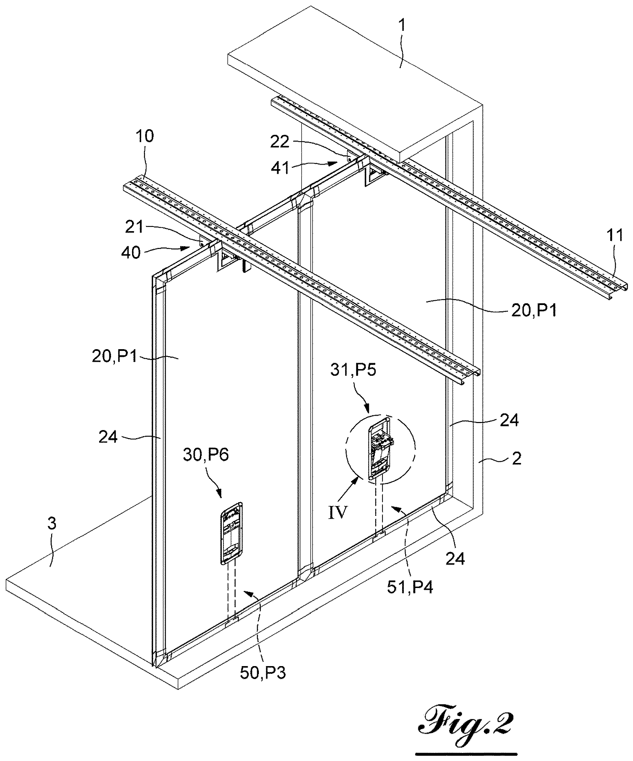

La figure 2 montre le système tel qu'il était présenté en figure 1, sous le même angle, mais avec l'activation du mécanisme de manipulation et blocage 31, ce qui se traduit sur la vue par du fait que les parties visibles de ce mécanisme, affleurantes à la surface de la cloison 20 (d'un de ses côtés seulement) sont maintenant en saillie, et non plus enfoncées dans la cloison comme cela était le cas en figure 1. La conséquence de cette activation est que les éléments cachés 51 sont passés en position rétractée P4 et qu'il n'y a plus d'appui par un patin dépassant de la tranche de la cloison 20 sur le plancher 3. Ainsi, dans cette configuration, la cloison 20 est moins maintenue, et si le deuxième mécanisme de manipulation et blocage 30 est activé de la même manière, la cloison 20 peut devenir mobile par rapport au plancher 3.

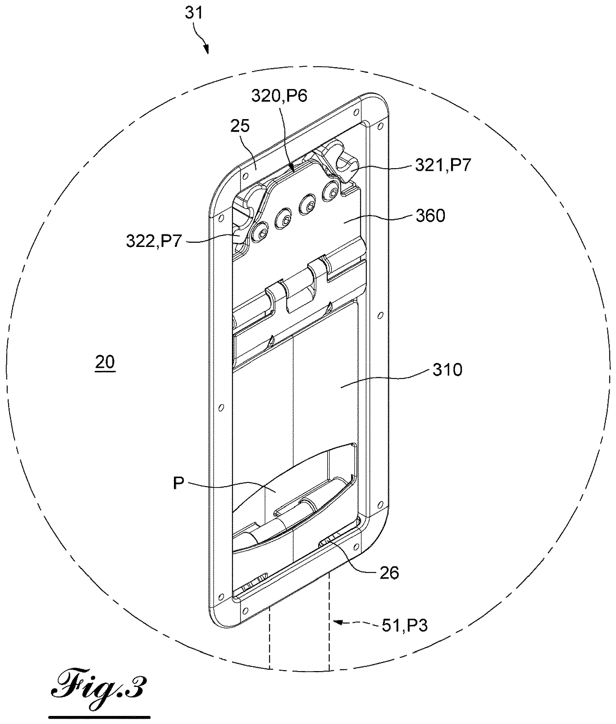

La figure 3 montre le détail des parties visibles du mécanisme de manipulation et blocage affleurant sur celle des faces de la cloison 20 montrée en figure 1. Le mécanisme est ici montré en position P6 enfoncée dans la cloison, la partie cachée 51 étant quant à elle en position étendue P3.

La cloison 20 dispose d'un évidement creusé sur sa face visible sur la figure pour recevoir dans son épaisseur les parties visibles du mécanisme de manipulation et blocage 31. Celui-ci est délimité par un cadre 25 rectangulaire à l'intérieur duquel est présente une poignée 310 et un crochet 320. C'est le crochet 320 qui en particulier est en position P6 enfoncée dans la cloison 20, mais cela s'applique aussi à la poignée 310. La poignée 310 comporte en particulier une prise de poignée P et un système d'articulation pivot 26 la reliant mécaniquement aux parties cachées 51, qui sont montées en translation vis-à-vis de la cloison 20 dans l'épaisseur de celle-ci. On voit de plus sur la figure essentiellement une face du crochet 320, référencée 360, qui prend la forme d'une plaque plane 360 qui se positionne, dans la position P6, approximativement dans le plan de la surface de la cloison. Cette plaque constitue un élément du corps du crochet.

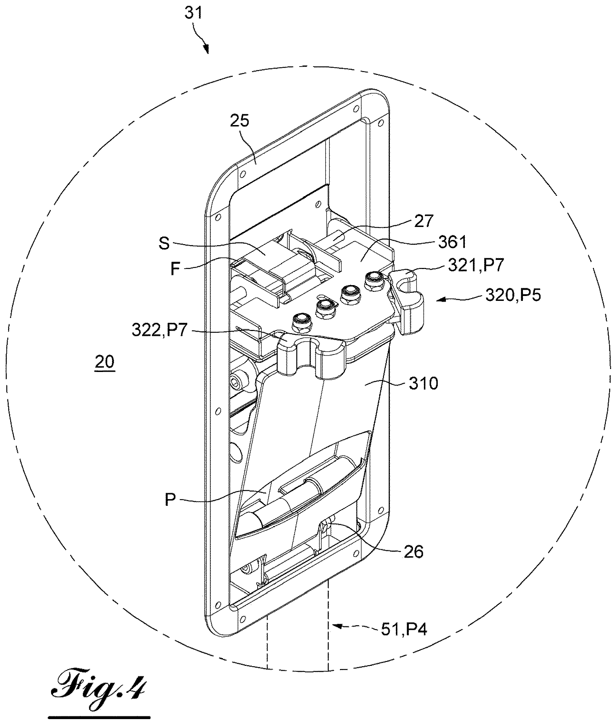

La figure 4 montre le mécanisme de manipulation et blocage 31, tel que représenté en figure 3, mais avec maintenant la poignée 310 basculée et le crochet 320 en position en saillie P5.

On constate sommairement que la poignée 310 a basculé d'environ 30° autour d'un axe virtuel perpendiculaire aux éléments cachés 51 et à la grande dimension du cadre 25 (qui est parallèle à la droite reliant le mécanisme de manipulation et blocage à l'articulation reliant la paroi au plafond), et parallèle à la cloison 20 et au pivot du système d'articulation pivot 26.

On constate également sommairement que le crochet 320 a basculé de 90° autour d'un axe 27, parallèle au système d'articulation pivot 26 et donc perpendiculaire à la grande dimension du cadre 25 et à la direction d'allongement et d'extension des éléments cachés 51. L'axe 27 est intégré dans l'épaisseur de la cloison 20, parallèlement à la surface de celle-ci, et se situe, par rapport à la poignée 310, à proximité de l'extrémité du cadre 25 opposé aux éléments cachés 51.

On précise que pour produire le basculement du mécanisme de manipulation et montage 31 de sa configuration en figure 3 à sa configuration en figure 4, il a suffi qu'un opérateur insère sa main dans la prise de poignée P et exerce un moment de rotation pour faire basculer la poignée 310 vers l'extérieur de la cloison 20 autour du pivot du système d'articulation 26, entrainer une translation des parties cachées 51 et du système d'articulation pivot 26 vers la rétractation, et entrainer également la mise en saillie du crochet 320.

Aux figures 3 et 4, il est visible que le crochet 320 est une pièce complexe ayant globalement une forme de parallélépipède rectangle dont la plus faible dimension (épaisseur) est positionnée, dans la position enfoncé dans la cloison P6, parallèlement à l'épaisseur de la cloison, et la plus grande parallèlement à la droite reliant les articulations 40 et 41, également parallèlement à l'axe 27, et donc perpendiculairement à la direction d'extension des éléments cachés 51. Les deux grandes faces du parallélépipiède rectangle sont la plaque plane 360 et de l'autre côté, la plaque plane 361, qui dans la position enfoncée dans la paroi est invisible (voir figure 3), puisque placée au fond de l'évidement de la paroi dans lequel est placé le mécanisme de manipulation et blocage. Les plaques 360 et 361 sont le corps du crochet, et sont articulées directement sur les axes 27 (mentionné plus haut) et 316 (qui sera mentionné plus loin).

Les quatre coins du parallélépipède rectangle les plus éloignés des éléments cachés 51, et les plus proches des articulations 40 et 41 sont formés par deux agrafes 321 et 322 qui sont des pièces mobiles en rotation par rapport au reste du crochet 320 autour d'axes parallèles à l'épaisseur du crochet, et qui ont la même épaisseur que le corps de celui-ci.

Ces deux agrafes 321 et 322 sont dans les positions de la figure 3 et de la figure 4 en position de libération P7, qui sera discutée plus loin. Cette position permet aux agrafes de rentrer dans l'espace délimité par le cadre 25 dans la position enfoncé dans la cloison P6, alors que les agrafes 321 et 322 peuvent adopter une position dite de fixation P8 dans laquelle il serait impossible de faire entrer le crochet 320 dans l'espace délimité par le cadre 25.

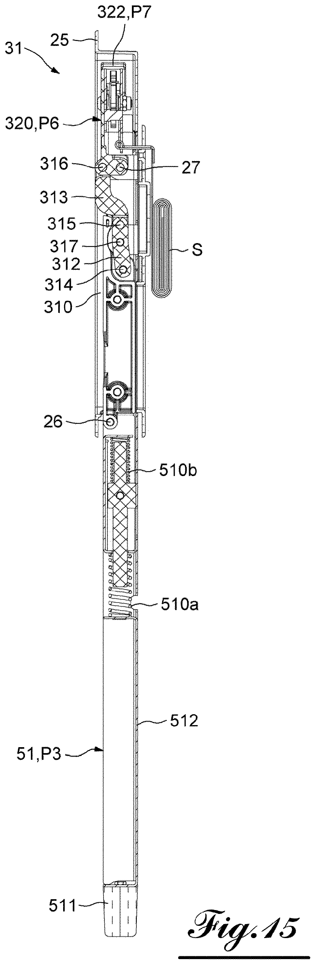

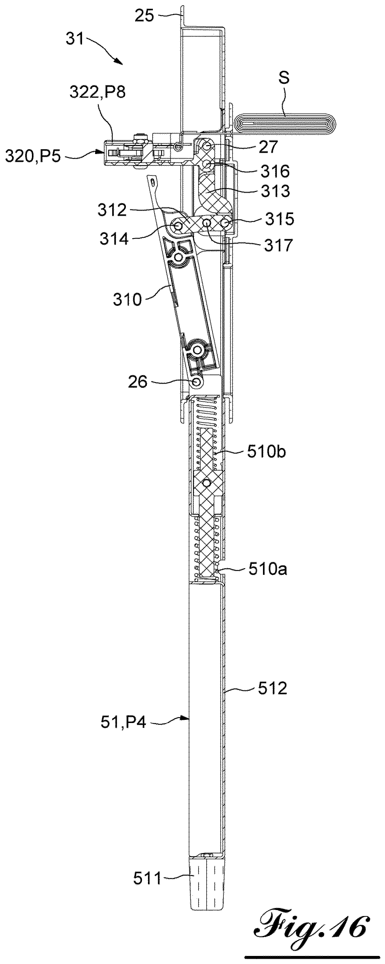

Le mécanisme reliant la poignée 310 au crochet 320 sera commenté en lien avec la figure 15 et la figure 16. Il comprend deux biellettes dont une est visible en figure 3.

La commande des agrafes du crochet est fait par l'intermédiaire d'une sangle S qui traverse la cloison par une fente F pour être accessible sur la face opposée de la cloison. Il en résulte que la sangle S et la prise de poignée P sont accessibles chacune d'un côté différent de la cloison.

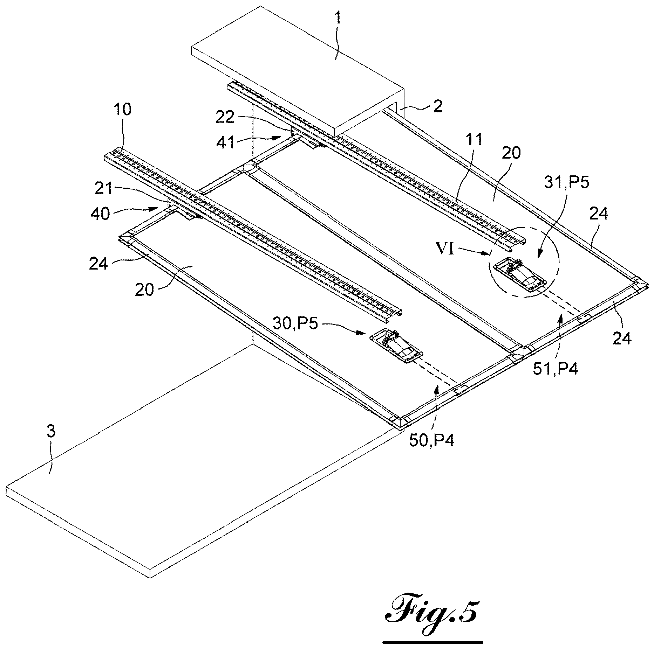

En figure 5 on a représenté sous la même vue de trois quarts que les figures 1 et 2 le système de compartimentation, en cours d'escamotage, la cloison 20 étant repliée contre le plafond 1. Ainsi on voit que l'articulation 40 et l'articulation 41 servent à l'application d'une liaison pivot parallèle au plafond 1 et perpendiculaire à la paroi latérale 2 ainsi qu'aux rails 10 et 11. Les lèvres 24 restent au contact de la paroi latérale 2 et de la paroi latérale lui faisant face et glissent le long de celles-ci dans le cadre du mouvement de pivot de la cloison 20 autour des articulations 40 et 41. Les lèvres 24 qui étaient auparavant au contact du plancher 3 s'éloignent de celui-ci et ne forment plus de contact. Ainsi, il en résulte que les deux sous-espaces qui avaient été créés dans le camion frigorifique sont réunis et que l'air peut passer aisément de l'un à l'autre sous la cloison 20.

Le basculement de la cloison 20 dans un mouvement pivot amène la face de celle-ci qui porte les parties visibles des mécanismes de manipulation et blocage affleurantes en vis-à-vis de la face interne du plafond 1, hors de portée de l'opérateur, inaccessibles à celui-ci.

Ainsi, comme cela est visualisé sur la figure 5 les mécanismes de manipulation et blocage 30 et 31 sont tous les deux en position avec crochet en saillie, le crochet des mécanismes de manipulation et blocage 30 et 31 se retrouvent en approche de la portion des rails respectivement 10 et 11 située à une distance de l'articulation 40 et 41 respectivement égale à la hauteur, le long de la cloison 20 entre l'articulation 40 respectivement 41 et le mécanisme de manipulation et blocage 30 respectivement 31.

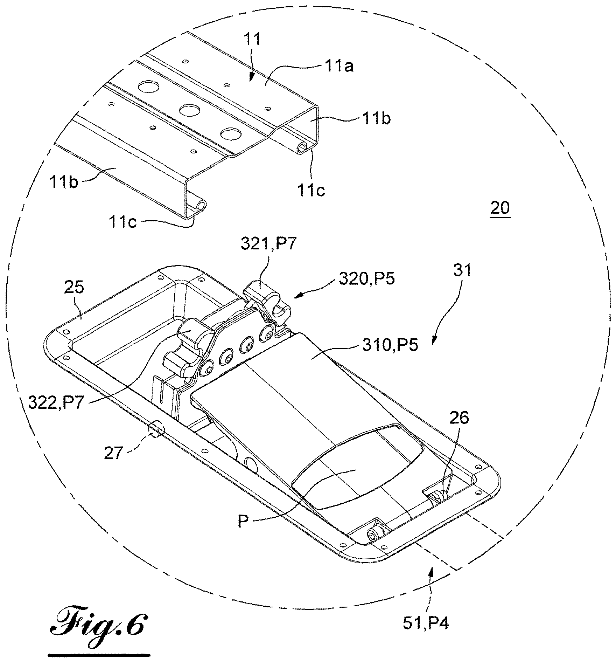

La figure 6 présente une vue en détail de l'approche du mécanisme de manipulation et blocage 31 vis-à-vis du rail 11.

On voit que le rail 11 est constitué d'un profilé, par exemple métallique (acier ou aluminium) ou polymère, ayant la forme d'un rectangle de profil dont l'un des grands côtés est interrompu sur une longue portion centrale et centrée. Ainsi, le rail 11 comprend une portion 11a constituant un grand côté du rectangle de profil non interrompu plaqué contre le plafond 1, deux ailes 11b parallèles l'une à l'autre et constituant les petits côtés du rectangle de profil, et deux ailes 11c constituant des portions extrêmes du grand côté du rectangle de profil opposé à l'aile 11a, qui est interrompu sur sa majeure partie.

Le crochet 320, qui est dans sa position de la figure 4, présente à ses deux extrémités distales par rapport à la cloison, s'approchant du rail, les agrafes 321 et 322 respectivement. Elles sont représentées sur la figure 6 dans la position P7 qualifiée de position de libération. Elles ont des formes leur permettant d'être glissées dans l'extrémité du rail 11 en sorte d'interagir avec les ailes 11c, de manière à former un ensemble complémentaire avec le rail, une fois les deux éléments insérés l'un vis-à-vis de l'autre.

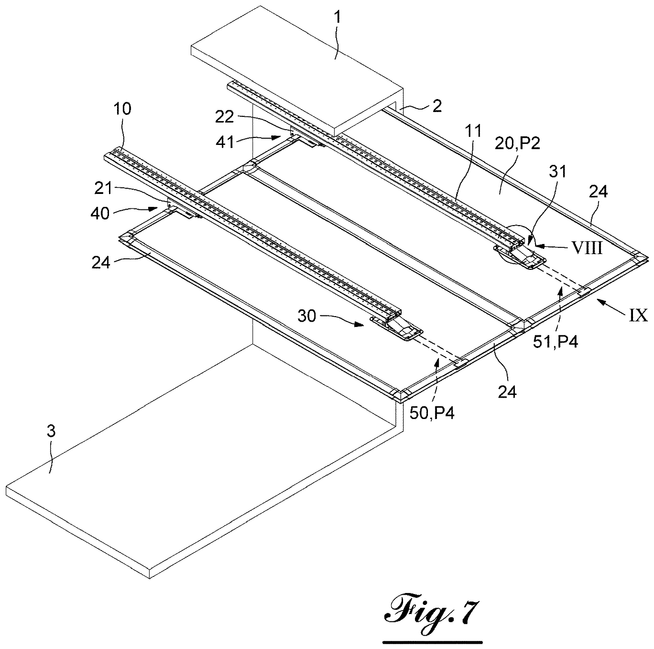

La figure 7 montre, sous l'angle de la figure 1 l'insertion des crochets des mécanismes de manipulation de blocage 30 et 31 dans les rails 10 respectivement 11.

Grâce à cette insertion, qui est réalisée en utilisant la liaison glissière offerte par le chariot 21 respectivement 22 et le rail 10 respectivement 11, la cloison 20 est attachée à ses deux extrémités au plafond 1. En effet, l'une des extrémités de la cloison est retenue par l'intermédiaire des articulations 40 et 41 et l'autre extrémité est retenue au plafond 1 par l'intermédiaire de l'agencement obtenu par insertion réciproque du crochet 320 des moyens de manipulation et blocage 30, respectivement 31 dans le rail 10, respectivement 11.

Ainsi, à partir de cette configuration représentée à la figure, la cloison est escamotée plaquée contre le plafond 20 et permet d'utiliser l'ensemble du volume intérieur de l'espace de chargement du camion frigorifique, sans être gêné par un quelconque obstacle dans ce volume.

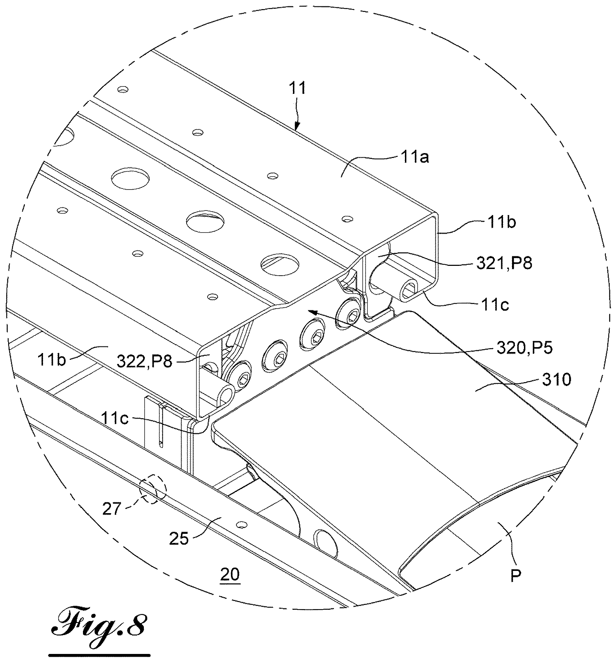

La figure 8 représente en gros plan l'agencement obtenu par insertion réciproque du crochet 320 dans le rail 11.

Ainsi on voit que le crochet 320 est en position en saillie P5, avec les agrafes 321 en positon de fixation P8. On voit aussi que le crochet 320 est parvenu dans sa position en saillie par rotation autour d'un axe de rotation 27 déjà présenté en figure 4. Cet axe de rotation 27 lui a permis d'atteindre sa position relative vis-à-vis de la cloison 20 et du cadre 25. L'axe de rotation 27 est un axe matériel reliant le cadre 25 au crochet 320, en liaison pivot. La poignée 310 est en position oblique par rapport à la paroi 20. La prise de poignée P étant orientée du côté de la cloison 20 qui est proche du plafond, elle n'est pas atteignable par l'opérateur qui manipule le système.

On voit que les agrafes 321 et 322 sont en prise avec l'extrémité des ailes 11c avec lesquelles elles interagissent respectivement. On observe que les ailes 11c se terminent par une mise en forme de la tôle en tube profilé interne au rail 11. Les agrafes 321 et 322 s'accrochent autour du tube terminant les ailes 11c.

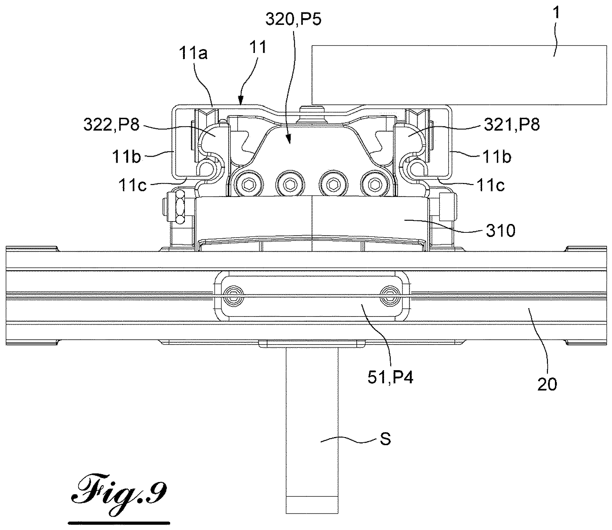

La figure 9 montre les mêmes éléments que la figure 8, mais sous un angle de vue parallèle à la surface de la cloison 20. On voit, en arrière-plan, le crochet 320 en position P5 en saillie et les agrafes 321 en position de fixation P8 (comme à la figure précédente).

Les agrafes 321 et 322 sont des pièces en demi-lune dont la concavité est tournée vers l'extrémité du crochet 320 sur laquelle est située l'agrafe. Les agrafes accueillent dans leur concavité respective le tube qui termine l'aile 11c.

Sur cette figure on observe de plus, au premier plan, les éléments cachés 51 du mécanisme de manipulation et blocage 31, qui sont affleurants à la surface de la tranche de la cloison 20 opposée à l'articulation. Plus précisément c'est le patin qui est visible.

On voit également sur cette figure, en arrière-plan, sur la face de la cloison 20 opposée à la poignée 310 et au crochet 322, la présence d'une sangle S accessible pour un opérateur se situant dans l'espace de chargement alors que la cloison 20 est en position escamotée. Ainsi, on voit que la poignée 310 est inaccessible pour l'opérateur, car elle se trouve alors entre la cloison 20 et le plafond 1, et que c'est la sangle S qui peut être saisie, en levant le bras. La sangle étant par conception en matériau souple, elle pend du plafond sous l'effet de la gravité.

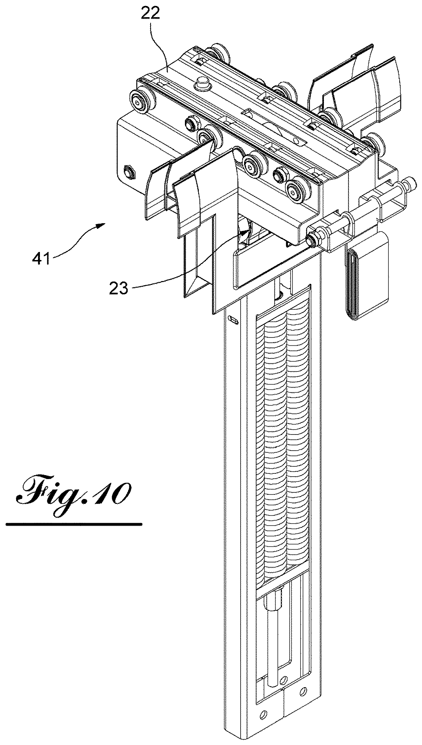

En figure 10 on a représenté l'articulation 41 qui est montée sur un chariot 22 circulant sur le rail 11. L'articulation 41 comprend en particulier un pivot 23 d'axe parallèle au plafond et parallèle au plan de la cloison 20. Les éléments de l'articulation 41 sont en grande partie intégrés dans l'épaisseur de la cloison et le chariot est un élément transversal à la cloison dépassant des deux côtés de celle-ci en sorte que la cloison soit globalement centrée par rapport au chariot quand elle est en position de division P1.

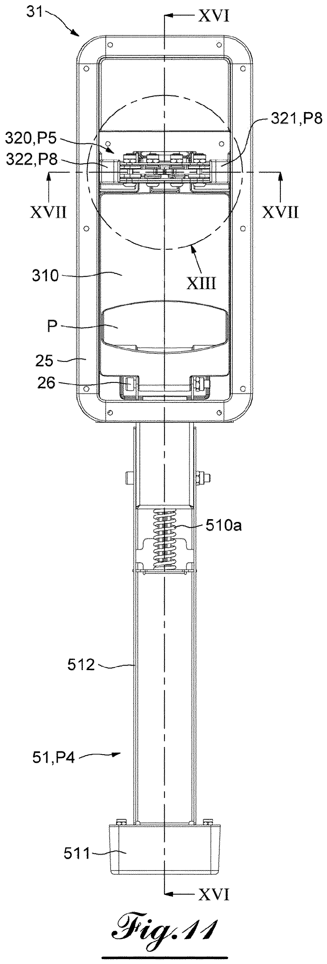

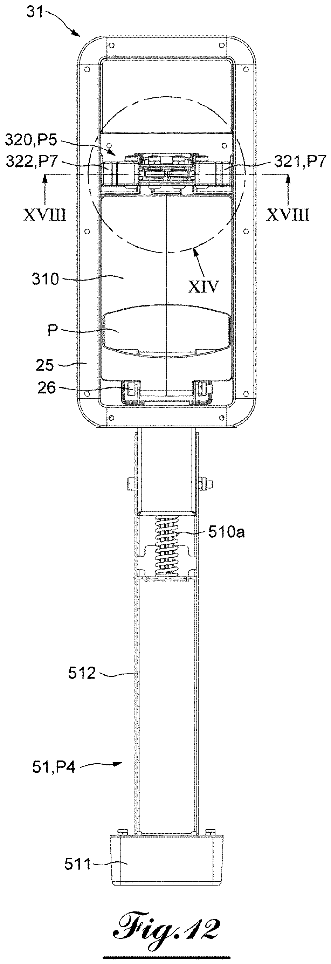

En figure 11 et en figure 12 on a représenté le mécanisme de manipulation de blocage 31 avec ses éléments cachés 51 en position rétractée P4.

On observe à l'extrémité des éléments cachés 51 le patin 511 qui est affleurant sur la tranche de la cloison 20, et qui en position rétractée n'appuie pas sur le plancher, puisqu'il ne dépasse pas de la tranche de la cloison, alors que dans sa position d'extension P3 il appuie sur le plancher en sorte de bloquer la cloison 20 en position de division P1.

Les éléments cachés 51 étant en position rétractée P4, le crochet 320 est en position en saillie P5, avec la poignée 310 en position oblique par rapport à la cloison 20 et au cadre 25. On voit sur la figure l'axe 26 de pivotement de la poignée 310 par rapport à des éléments du mécanisme (les éléments cachés) situés en direction du patin 511 et comportant en particulier une béquille 512 et un ressort 510a.

La figure 12 présente la même vue que la figure 11, mais les agrafes 321 sont cette fois ci en position de libération P7, alors qu'en figure 11 elles étaient en position de fixation P8.

Sur les figures 11 et12 on voit que le mécanisme de verrouillage et blocage admet un plan de symétrie perpendiculaire à la cloison, et vis-à-vis duquel les agrafes 321 et 322 sont symétriques l'une de l'autre. Vis-à-vis du même plan, les ailes 11c du rail sont symétriques l'une de l'autre.

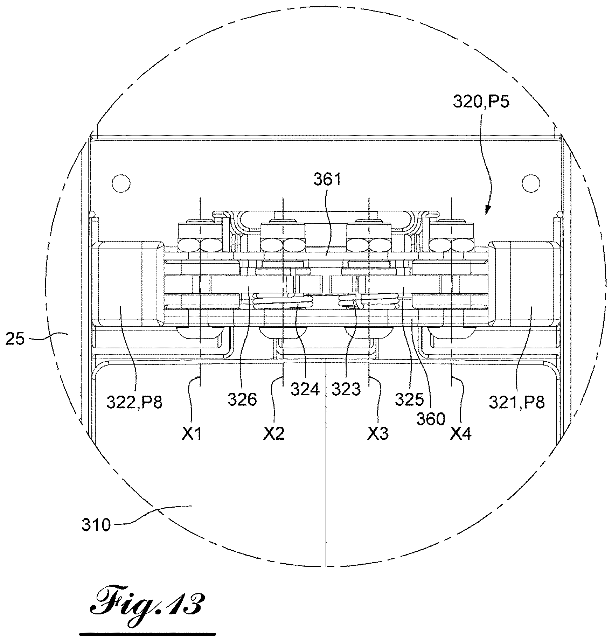

La figure 13 montre le détail du repère 13 de la figure 11, et on y voit les agrafes 321, respectivement 322.

La figure 13 montre la structure du crochet 320, visualisé ici en position en saillie P5. Parallèlement à la surface de la cloison 20 et au plan du cadre 25, le crochet 320 comprend quatre systèmes vis écrous définissant des axes parallèles les uns aux autres X1, X2, X3, X4. Ainsi se succèdent le long du crochet 320, parallèlement à l'axe 27 et aux plaques planes 360 et 361 dans l'espace les séparant, tout d'abord l'agrafe 321, puis l'axe X4, puis l'axe X3, puis l'axe X2 puis l'axe X1 et enfin l'agrafe 322.

L'agrafe 321 est articulée en pivotement autour de l'axe X4, alors que l'agrafe 322 est articulée en pivotement autour de l'axe X1.

Un crampon 325 est articulé en rotation autour de l'axe X3 et un crampon 326 est articulé en rotation autour de l'axe X2. Ils sont chacun formé d'une pièce intégrée dans l'épaisseur du crochet 320, qui interagit avec les pièces voisines à gauche et à droite. Ainsi le crampon 325 interagit avec l'agrafe 321 et le crampon 326, et le crampon 326 interagit avec le crampon 325 et l'agrafe 322.

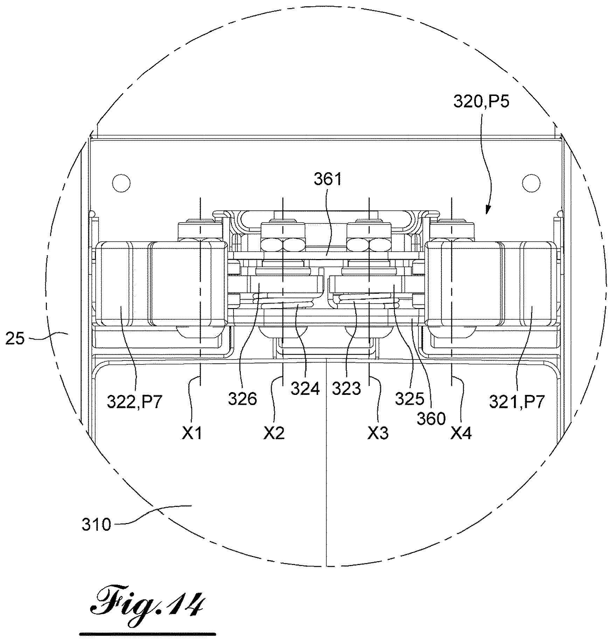

La figure 14 montre le même détail, avec les agrafes 321 et 322 en position de libération P7.

Il est visible que pour obtenir le passage pour les agrafes 321 et 322 de la position de fixation P8 de la position de libération P7, une rotation de chacun des crampons 325 et 326 a été effectuée.

Sur ces deux figures, on voit aussi que des ressorts de torsion 323 et 324 sont en place autour des axes X3 et X2 pour accompagner les mouvements des crampons 325 et 326.

En figure 15 on voit en vue de côté en coupe le mécanisme de de manipulation et blocage 31 en position étendue P3 avec le crochet 320 en position enfoncée P6.

La poignée 310 est articulée en rotation à la béquille 512 par l'axe 26 parallèle au plan de la cloison.

La poignée 310 est également articulée en rotation par un axe 314 parallèle au précédent avec une extrémité (au sens de la vue en coupe) d'une première biellette 312. La biellette 312 est articulée en rotation à une fraction de sa longueur qui est environ la moitié de sa longueur avec le cadre 25 par un axe horizontal parallèle aux axes précédents et référencé 317.

A l'opposé de l'axe 314 par rapport à l'axe 317, à sa deuxième extrémité, la première biellette 312 est également articulée en rotation par un axe 315 avec une deuxième biellette 313, à une première extrémité (au sens de la vue en coupe) de celle-ci.

La deuxième biellette 313 est articulée en rotation à sa deuxième extrémité au crochet 320 par un axe 316. Cet axe 316 est parallèle aux autres axes évoqués à savoir les axes 315, 314, 317 et 26.

Comme on l'a déjà dit le crochet 320 est articulé en rotation au cadre 25 par un axe 27, qui est parallèle aux axes décrits ci-dessus, référencés 26, 314, 315 et 317.

En partant de la position de la figure 15, si la poignée 310 est extraite de l'épaisseur de la cloison 20 par l'opérateur qui saisit la prise de poignée P, elle tire la béquille 512 de la position étendue vers la position rétractée, ce qui constitue un mouvement de translation dans le plan de la cloison parallèlement aux côtés de celle-ci dans la direction de l'articulation de la cloison sur le plafond.

La poignée 310 a de plus un mouvement de rotation antihoraire et fait pivoter la première biellette 312 selon à l'inverse un mouvement horaire. Cela a pour que celle-ci tire la deuxième biellette 313 en direction du patin 511 et dans l'épaisseur de la cloison ce qui provoque le basculement antihoraire du crochet 320 vers sa position en saillie, compte tenu de la position de l'axe 316 par rapport à l'axe 27.

A l'inverse, en partant de la figure 16, si un opérateur pousse le crochet pour le faire rentrer dans son logement, en lui imprimant un mouvement de rotation horaire, la biellette 313 va faire tourner la biellette 312 dans le sens antihoraire, ce qui va ramener la poignée 310 dans son logement et amener le patin et la béquille vers la position étendue de la figure 15.

On voit par ailleurs, sur les figures 15 et 16, qu'une sangle S (déjà mentionnée en relation avec la figure 9) est accrochée par l'une de ses extrémités au crochet 320, et traverse l'épaisseur de la paroi de la cloison, dans laquelle elle est insérée, par une fente. Elle est accessible sur la face de la cloison opposée à la face sur laquelle la poignée et le crochet sont accessibles. La cloison est en figure 15 verticale et la sangle, sous l'effet de la gravité, pend vers le plancher, le long de la cloison, occupant très peu d'espace dans le compartiment du camion. A l'inverse, en figure 16, la cloison est en position horizontale, plaquée contre le plafond, et la sangle, sous l'effet de la gravité, pend vers le plancher à angle droit de la cloison.

On précise qu'un ressort de compression 510a placé entre deux surfaces de la béquille 512, qui est en deux parties formant une structure télescopique, plaque le patin vers l'extérieur tout en offrant une flexibilité pour les manipulations.

On précise aussi que le mouvement de la poignée 310 est accompagné par un ressort de compression 510b placé entre un élément fixé à la cloison et une surface d'appui de la béquille 512. Ainsi l'opérateur qui souhaite sortir la poignée va trouver son mouvement facilité par la tendance du ressort de compression 510b à pousser la béquille vers sa position rétractée.

A l'inverse, quand l'opérateur va vouloir rentrer la poignée, il va devoir effectuer un effort supplémentaire pour comprimer le ressort 510b configuré pour s'opposer à ce mouvement par lequel la poignée 310 et le crochet 320 sont enfoncés dans l'épaisseur de la cloison.

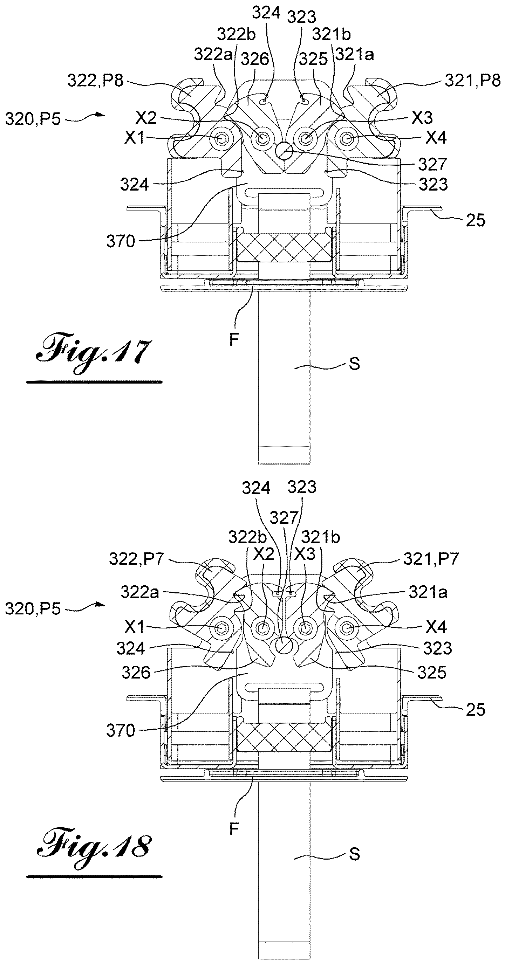

En référence à la figure 17 on a représenté l'interaction entre la sangle S, les agrafes 321 et 322 et les crampons 325 et 326. La vue est une vue de coupe selon un plan parallèle au plan de la vue de la figure 9, passant dans l'épaisseur du crochet 320, entre les plaques planes 360 et 361. La cloison est horizontale parallèle au plafond, et la sangle S pend vers le plancher perpendiculairement à la cloison.

En figure 17 les agrafes sont en position de fixation, alors qu'en figure 18 qui montre la même partie du mécanisme sous le même angle de vue, les agrafes sont en position de libération. Un cran sépare les deux positions, qui sont définies par des renfoncements 321a et 322a (position de libération P7) et 322a et 322b (position de fixation P8) respectivement dans les agrafes, dans lesquelles, s'insère une forme complémentaire du crampon 326 respectivement 325 pour définir la position. Les ressorts de torsion 323 et 324 ramènent le mécanisme vers la position adoptée en faisant tourner un crampon dans un sens et l'agrafe associée dans l'autre sens, ce qui impose qu'une force extérieure permettant de surmonter les forces de résistance des ressorts soit appliquée pour faire passer les agrafes de l'une des positions à l'autre.

La sangle S est agencée de manière à permettre à un opérateur de tirer le mécanisme de la position de fixation à la position de libération. Pour cela elle est fixée à une plaque dite de déverrouillage 370 insérée dans l'épaisseur du crochet 320, parallèlement aux deux grandes faces de celui-ci, c'est-à-dire entre les plaques planes 360 et 361. La fixation est faite sous la forme de l'insertion d'une extrémité libre de la sangle dans une lumière de la plaque de déverrouillage, et le collage, avec des techniques connues, de la sangle sur elle-même après cette insertion pour former une boucle.

La sangle S quand elle est tirée par l'opérateur fait glisser dans le plan du crochet 322 la plaque de déverrouillage 370 qui porte un ergot orthogonal à son plan et au plan des plaques planes 360 et 361. L'ergot force les crampons 325 et 326 à tourner dans le sens du désengagement de la position de fixation, et rapidement vers l'engagement de la position de libération.

La sangle S traverse la cloison par la fente F.

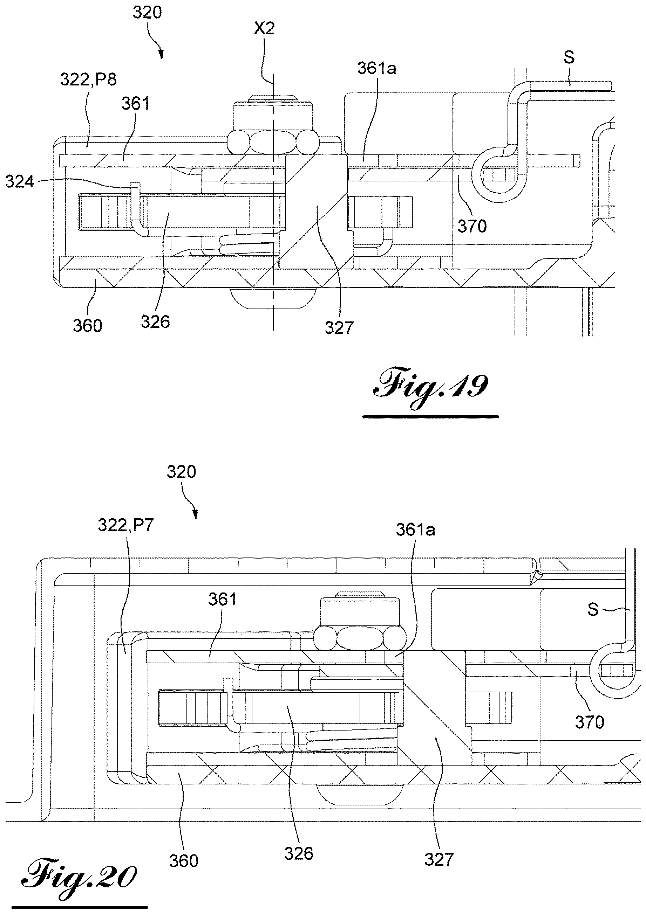

En figure 19, on a représenté en coupe le crochet avec ses agrafes en en position de fixation. Une traction par l'opérateur sur la sangle S provoque la translation de la plaque de déverrouillage 370 dans laquelle l'ergot 327 est encastré. Celui-ci suit donc le mouvement de translation. Un trou oblong 361a dans l'épaisseur de la plaque plane 361 permet à l'ergot 327 de suivre le mouvement de translation vis-à-vis de cette plaque constituant une des faces du crochet qu'il traverse en sorte d'être visible à l'arrière du crochet (voir en figure 4 où le trou oblong est visible). De plus, la plaque de déverrouillage 370 suit un mouvement de translation vis-à-vis des axes X1, X2, X3 et X4, du fait de sa forme qui lui permet de ne pas buter contre eux. Les crampons 326 et 325 sont tournés par l'ergot. Les agrafes 321 et 322 tournent sous l'effet des crampons et passent en position de libération.

En figure 20, on a représenté en coupe le crochet avec ses agrafes en en position de libération P7, à l'issue du mouvement mené à partir de la figure 19 en tirant sur la sangle S.

La commutation inverse, vers la position de fixation P8 de la figure 19 à partir de la figure 20 et de la position P7, se fait en effectuant le mouvement, par l'opérateur, de la figure 6 vers la figure 8. Les ailes 11c du rail, en réaction à la force appliquée par l'opérateur, poussent les agrafes 321 et 322 en rotation dans le sens du désengagement de la position de libération, et rapidement vers l'engagement de la position de fixation. Les crampons tournent sous l'effet de la rotation des agrafes. L'ergot 327 est entrainé par les crampons et la sangle S est rappelée vers la cloison.

A la place de la sangle S, une corde un câble ou une chaîne ou chaînette peut être utilisée. On s'intéresse à un moyen de traction en matériau souple (corde ou sangle) ou de construction souple (câble, chaîne, chaînette), qui peut coulisser dans un sens ou dans l'autre en fonction de la rétractation du crochet dans l'épaisseur de la cloison ou son extraction pour sa mise en saillie, et qui n'occupe pas d'espace une fois la cloison dressée dans l'espace de chargement. Ainsi, ce moyen de traction souple s'efface en coulissant et en se plaçant spontanément le long de la paroi dressée, vers le sol sous l'effet de son poids. La sangle est naturellement équipée d'un épaississement ou de tout moyen pour éviter qu'elle ne glisse, à travers la fente F, entièrement du côté de la cloison où se trouve le crochet, et elle reste donc toujours accessible.

## Revendications

1. Système de compartimentation escamotable d'un espace entouré de parois, le système de compartimentation comprenant une cloison (20) et un moyen (40, 41) de pivotement de la cloison (20) entre une position (P1) de division de l'espace et une position (P2) escamotée dans laquelle la cloison (20) est disposée contre une première paroi (1) de l'espace, le système de compartimentation comprenant un mécanisme (30, 31) de manipulation et blocage embarqué sur la cloison comportant un béquille (511) adoptant une position (P3) étendue dans laquelle la béquille (511) peut être en appui contre une deuxième paroi (3) de l'espace opposée à la première paroi (1) pour bloquer la cloison (20) dans sa position (P1) de division ou, en fonction de la manipulation effectuée, laissant la cloison (20) mobile entre sa position (P1) de division et sa position (P2) escamotée, le système de compartimentation comprenant aussi un crochet (320) du mécanisme (30, 31) de manipulation et blocage pour maintenir à la première paroi la partie distale, par rapport au moyen de pivotement, de la cloison (20) quand elle est en position (P2) escamotée, le crochet (320) adoptant une position de fixation (P8) sous l'action d'un opérateur engageant le crochet dans une prise complémentaire (10, 11) de la première paroi pour maintenir la cloison en position escamotée, et adoptant une position de libération (P7) sous l'action d'un opérateur tirant une commande (S, 370, 327) accessible sur la face de la cloison opposée au crochet, le système de compartimentation étant **caractérisé en ce que** le crochet est relié à la béquille par une biellette du mécanisme (30, 31) de manipulation et blocage qui amène la béquille (512, 511) en position étendue en rétractant simultanément le crochet (520) dans l'épaisseur de la cloison, et inversement extrait le crochet de l'épaisseur de la cloison en rétractant simultanément la béquille, la commande (S, 370, 327) du crochet comprenant un moyen de traction (S) monté glissant dans un passage de la cloison pour suivre le crochet (320) lors de son extraction et s'effacer lors de sa rétractation.

2. Système de compartimentation escamotable selon la revendication 1, **caractérisé en ce que** la prise complémentaire (11) est un profilé fixé à la première paroi sur lequel la cloison est montée en translation en sorte qu'il lui serve de rail (11a, 11b, 11c).

3. Système de compartimentation escamotable selon la revendication 1 ou la revendication 2, **caractérisé en ce que** le crochet (320) dispose de deux agrafes (321, 322) qui s'insèrent symétriquement dans une concavité de la prise complémentaire (11).

4. Système de compartimentation escamotable selon l'une quelconque des revendications précédentes, **caractérisé en ce qu'**un ou des ressorts (323, 324) rappellent le crochet (320) soit vers la position de libération (P7) soit vers la position de fixation (P8), une fois la position (P7, P8) adoptée.

5. Système de compartimentation escamotable selon l'une quelconque des revendications précédentes, **caractérisé en ce que** les positions de fixation (P8) et de libération (P7) sont séparées par un cran et définies par deux renfoncements (321a, 321b, 322a, 322b) dans une agrafe (321, 322) du crochet (320) dans lesquels un crampon (325, 326) du crochet s'insère alternativement quand l'une ou l'autre des deux positions (P7, P8) est adoptée, le crampon étant manoeuvré en rotation vis-à-vis du corps (360, 361) du crochet quand l'opérateur tire sur le moyen de traction (S, 370, 327) en partant de la position de fixation, l'agrafe étant manoeuvrée en rotation vis-à-vis du corps (360, 361) du crochet quand l'opérateur engage le crochet sur la prise complémentaire (10, 11).

6. Système de compartimentation escamotable selon l'une quelconque des revendications précédentes, **caractérisé en ce que** la béquille (512) et le crochet (320) sont articulés par l'intermédiaire de deux biellettes (312, 313) et d'une poignée (310) extractible de la cloison par pivotement, la béquille se rétractant dans la cloison par translation, et le crochet se rétractant dans la cloison par rotation.

7. Système de compartimentation escamotable selon l'une quelconque des revendications précédentes, **caractérisé en ce que** le moyen de traction (S) est une sangle accrochée à une plaque (370) de la commande montée en translation dans un corps (360, 361) du crochet, le passage étant une fente.

8. Système de compartimentation escamotable selon l'une quelconque des revendications précédentes, **caractérisé en ce que** la première paroi (1) est le plafond, et la deuxième (3) le plancher.

9. Camion frigorifique dont l'espace de chargement est un espace entouré de parois comprenant un système de compartimentation escamotable selon l'une des revendications 1 à 8.

## Patentansprüche

1. Versenkbares Trennwandsystem für einen von Wänden umgebenen Raum, wobei das Trennwandsystem eine Zwischenwand (20) und ein Mittel (40, 41) zum Schwenken der Zwischenwand (20) zwischen einer Position (P1) der Trennung des Raums und einer versenkten Position (P2) umfasst, in der die Trennwand (20) gegen eine erste Wand (1) des Raums angeordnet ist, wobei das Trennwandsystem einen Mechanismus (30, 31) zur Handhabung und Blockierung umfasst, der in der Trennwand verbaut ist, umfassend einen Stütze (511), die eine ausgezogene Position (P3) einnimmt, in der die Stütze (511) gegen eine zweite Wand (3) des Raum gegenüber der ersten Wand (1) aufliegen kann, um die Trennwand (20) in ihrer Position (P1) der Trennung zu blockieren, oder, je nach der durchgeführten Handhabung, die Trennwand (20) beweglich zwischen ihrer Position (P1) der Trennung und ihrer versenkten Position (P2) zu belassen, wobei das Trennwandsystem auch einen Haken (320) des Mechanismus (30, 31) zur Handhabung und Blockierung umfasst, um an der ersten Wand den distalen Teil mit Bezug auf das Mittel zum Schwenken der Trennwand (20) beizubehalten, wenn sie sich in der versenkten Position (P2) befindet, wobei der Haken (320) unter der Einwirkung eines Bedieners eine Befestigungsposition (P8) annimmt, die den Haken in eine komplementäre Halterung (10, 11) der ersten Wand eingreift, um die Trennwand in der versenkten Position zu halten, und eine Freigabeposition (P7) unter der Einwirkung eines Bedieners annimmt, der an einer Steuerung (S, 370, 327) zieht, die auf der Seite der Trennwand gegenüber dem Haken zugänglich ist, wobei das Trennwandsystem **dadurch gekennzeichnet ist, dass** der Haken mit der Stütze durch einen Schwingarm des Mechanismus (30, 31) zur Handhabung und Blockierung verbunden ist, der die Stütze (512, 511) in die ausgezogene Position bringt, indem gleichzeitig der Haken (520) in die Dicke der Zwischenwand zurückgezogen wird und umgekehrt der Haken aus der Dicke der Zwischenwand herausgenommen wird, indem gleichzeitig die Stütze zurückgezogen wird, wobei die Steuerung (S, 370, 327) des Hakens ein Zugmittel (S) umfasst, das gleitend in einem Durchgang der Zwischenwand montiert ist, um dem Haken (320) zu folgen, wenn er herausgenommen wird, und sich zu entfernen, wenn er zurückgezogen wird.

2. Versenkbares Trennwandsystem nach Anspruch 1, **dadurch gekennzeichnet, dass** die komplementäre Halterung (11) ein Profil ist, das an die erste Wand fixiert ist, auf die die Trennwand in Translation montiert ist, so dass es ihr als Schiene (11a, 11b, 11c) dient.

3. Versenkbares Trennwandsystem nach Anspruch 1 oder Anspruch 2, **dadurch gekennzeichnet, dass** der Haken (320) über zwei Klammern (321, 322) verfügt, die sich symmetrisch in eine Konkavität der komplementären Halterung (11) einfügen.

4. Versenkbares Trennwandsystem nach einem der vorhergehenden Ansprüche, **dadurch gekennzeichnet, dass** eine oder mehrere Federn (323, 324) den Haken (320) entweder in die Freigabeposition (P7) oder in die Befestigungsposition (P8) zurückstellen, nachdem die Position (P7, P8) eingenommen wurde.

5. Versenkbares Trennwandsystem nach einem der vorhergehenden Ansprüche, **dadurch gekennzeichnet, dass** die Befestigungs- (P8) und Freigabeposition (P7) durch eine Rast getrennt und durch zwei Verstärkungen (321a, 321b, 322a, 322b) in einer Klammer (321, 322) des Hakens (320) definiert sind, in denen ein Greifer (325, 326) des Hakens alternativ eindringt, wenn die eine oder die andere der zwei Positionen (P7, P8) eingenommen ist, wobei der Greifer gegenüber dem Körper (360, 361) des Hakens in Rotation gebracht wird, wenn der Bediener am Zugmittel (S, 370, 327) ausgehend von der Fixierungsposition zieht, wobei die Klammer gegenüber dem Körper (360, 361) des Hakens in Rotation gebracht wird, wenn der Bediener den Haken auf der komplementären Halterung (10, 11) eingreift.

6. Versenkbares Trennwandsystem nach einem der vorhergehenden Ansprüche, **dadurch gekennzeichnet, dass** die Stütze (512) und der Haken (320) mit Hilfe von zwei Schwingarmen (312, 313) und einem Griff (310) gelenkig verbunden sind, der aus der Trennwand durch Schwenken herausgezogen werden kann, wobei sich die Stütze in der Trennwand durch Translation zurückzieht und sich der Haken in die Trennwand durch Rotation zurückzieht.

7. Versenkbares Trennwandsystem nach einem der vorhergehenden Ansprüche, **dadurch gekennzeichnet, dass** das Zugmittel (S) ein Gurt ist, der an eine Platte (370) der Steuerung befestigt ist, die in Translation in einem Körper (360, 361) des Hakens montiert ist, wobei der Durchgang ein Spalt ist.

8. Versenkbares Trennwandsystem nach einem der vorhergehenden Ansprüche, **dadurch gekennzeichnet, dass** die erste Wand (1) ein Plafond und die zweite (3) Wand ein Fußboden ist.

9. Kühlwagen, dessen Laderaum ein Raum ist, der von Wänden umgeben ist, umfassend eine versenkbares Trennwandsystem nach einem der Ansprüche 1 bis 8.

## Claims

1. A system for retractable compartmentalization of a space surrounded by walls, the compartmentalization system comprising a partition (20) and a means (40, 41) for pivoting of the partition (20) between a position (P1) for dividing the space and a retracted position (P2) in which the partition (20) is arranged against a first wall (1) of the space, the compartmentalization system comprising a manipulation and blocking mechanism (30, 31) embedded on the partition including a stand (511) adopting an extended position (P3) in which the stand (511) can bear against a second wall (3) of the space opposite the first wall (1) to block the partition (20) in its dividing position (P1) or, as a function of the manipulation done, leaving the movable partition (20) between its dividing position (P1) and its retracted position (P2), the compartmentalization system also comprising a hook (320) of the manipulation blocking mechanism (30, 31) to maintain the distal part at the first wall, relative to the pivoting means, of the partition (20) when it is in the retracted position (P2), the hook (320) adopting an attachment position (P8) under the action of an operator engaging the hook in a complementary socket (10, 11) of the first wall to keep the partition in the retracted position, and adopting a release position (P7) under the action of an operator pulling a control (S, 370, 327) accessible on the face of the partition opposite the hook, the compartmentalization system being **characterized in that** the hook is connected to the stand by a connecting rod of the manipulation and blocking mechanism (30, 31) that brings the stand (512, 511) into the extended position while simultaneously retracting the hook (520) in the thickness of the partition, and conversely extracts the hook from the thickness of the partition while simultaneously retracting the stand, the command (S, 370, 327) of the hook comprising a traction means (S) mounted sliding in a passage of the partition to follow the hook (320) during its extraction and to withdraw during its retraction.

2. The retractable compartmentalization system according to claim 1, **characterized in that** the complementary socket (11) is a profile attached to the first wall on which the partition is mounted in translation such that it serves as a rail (11a, 11b, 11c).

3. The retractable compartmentalization system according to claim 1 or claim 2, **characterized in that** the hook (320) has two clips (321, 322) that are inserted symmetrically into a concavity of the complementary socket (11).

4. The retractable compartmentalization system according to any one of the preceding claims, **characterized in that** one or several springs (323, 324) return the hook (320) either toward the release position (P7) or toward the attachment position (P8), once the position (P7, P8) is adopted.

5. The retractable compartmentalization system according to any one of the preceding claims, **characterized in that** the attachment (P8) and release (P7) positions are separated by a notch and defined by two indentations (321a, 321b, 322a, 322b) in a clip (321, 322) of the hook (320) in which a cleat (325, 326) of the hook is alternatively inserted when one or the other of the two positions (P7, P8) is adopted, the cleat being maneuvered in rotation with respect to the body (360, 361) of the hook when the operator pulls on the traction means (S, 370, 327) starting from the attachment position, the clip being maneuvered in rotation with respect to the body (360, 361) of the hook when the operator engages the hook on the complementary socket (10, 11).

6. The retractable compartmentalization system according to any one of the preceding claims, **characterized in that** the stand (512) and the hook (320) are articulated by means of two connecting rods (312, 313) and a handle (310) that can be extracted from the partition by pivoting, the stand retracting in the partition by translation, and the hook retracting in the partition by rotation.

7. The retractable compartmentalization system according to any one of the preceding claims, **characterized in that** the traction means (S) is a strap attached to a plate (370) of the control mounted in translation in a body (360, 361) of the hook, the passage being a slot.

8. The retractable compartmentalization system according to any one of the preceding claims, **characterized in that** the first wall (1) is the ceiling, and the second wall (3) is the floor.

9. A refrigerated truck, the loading area of which is an area surrounded by walls comprising a retractable compartmentalization system according to one of claims 1 to 8.
